Europäisches Patentamt

European Patent Office

Office européen des brevets

(11) Veröffentlichungsnummer: **0 074 625**
A1

# (12) EUROPÄISCHE PATENTANMELDUNG

(21) Anmeldenummer: 82108320.1

(22) Anmeldetag: 09.09.82

(51) Int. Cl.³: **F 16 D 3/40**

(30) Priorität: 11.09.81 CH 5891/81

(43) Veröffentlichungstag der Anmeldung:
23.03.83 Patentblatt 83/12

(84) Benannte Vertragsstaaten:
AT DE GB IT NL SE

(71) Anmelder: GEORG FISCHER AKTIENGESELLSCHAFT
Mühlentalstrasse 105
CH-8201 Schaffhausen(CH)

(72) Erfinder: Gasser, Kurt
Meisenweg 4
CH-8200 Schaffhausen(CH)

(54) Gegossener Gelenkkopf für Kardanwelle.

(57) Der beschriebene Gabelkopf bzw. Gelenkkopf für Kardanwellen ist gegossen und ist mit Rippen (2) versehen, welche den für die Verbindung mit der Kardanwelle verwendete Rohrkörper (1) mit den beiden Lagern (3) verbindet.

Ferner ist der Gelenkkopf mit Angüssen (4) für das Auswuchten versehen.

Als Material wird vorzugsweise Gusseisen mit Kugelgraphit (GGG), z.B. GGG 50 verwendet.

Fig. 2

Fig. 3

Croydon Printing Company Ltd

EP 0 074 625 A1

-1-

GEORG FISCHER AKTIENGESELLSCHAFT,     8201 Schaffhausen

2277/FEW / 20.8.1982 / MS-ba /

Gegossener Gelenkkopf für Kardanwelle

Die Erfindung betrifft einen gegossenen Gelenkkopf
für Kardanwelle mit Rohrkörper zur verschiebbaren,
drehfesten Halterung der Kardanwelle, sowie mit
Körpern für das Auswuchten.

Derartige Gelenkköpfe aus Schmiedeisen sind bereits
bekannt, aber wegen des Aufbaus des Herstellungsverfahrens und der erforderlichen Bearbeitung relativ
kostspielig.

Geschmiedete Gelenkköpfe sind hauptsächlich deshalb
kostspielig, weil
a)    sich die Schmiedeform mit der Zeit abnutzt, und
b)    geschmiedete Gelenkköpfe einen hohen Arbeitszeitaufwand für die Bearbeitung erfordern.

Ein weiterer Nachteil von geschmiedeten Gelenkköpfen
besteht darin, dass sie eine geringe Dämpfungsfähigkeit besitzen, was auf die Herstellungsart zurückzuführen ist. Deshalb können derartige Gelenkköpfe, insbesondere bei grossen Lastwagen, relativ starke Schwingungen und Geräusche verursachen.

Auch gegossene Gelenkköpfe sind bekannt, da jedoch die Ausführungen sehr massiv ausgeführt wurden ist man von gegossenen Gelenkköpfen weitgehend abgekommen.

Aufgabe der Erfindung ist somit die Schaffung eines Gelenkkopfes für Kardanwellen, der die Nachteile bestehender Ausführungen nicht aufweist. Dabei soll der Gelenkkopf leichter, preisgünstiger als bisher herstellbar, leichter zu bearbeiten und möglichst stark schwingungsdämpfend sein.

Diese Aufgabe ist erfindungsgemäss mittels der Lehre gemäss dem gekennzeichneten Teil des Anspruches 1 gelöst.

Ausführungsformen dieser Lehre sind in den weiteren abhängigen Ansprüchen umschrieben.

Der geschaffene Gelenkkopf zeichnet sich durch
- einfache und preisgünstige Herstellung,
- niedrige Kosten für die Bearbeitung,
- starke Geräusch- und Schwingungsdämpfung des fertigen Produktes,
- Gewichtseinsparung, und
- steifere Form, aus.

Nachfolgend wird ein Ausführungsbeispiel des erfin-

0074625

- 3 -

dungsgemässen Gelenkkopfes anhand der Zeichnung
näher erläutert.

Es zeigen:

Fig. 1                eine Seitenansicht senkrecht zur
                      Längsachse des in den Gabelkopf
                      eingreifenden Kreuzzapfen,

Fig. 2                eine Seitenansicht gemäss Fig. 1,
                      jedoch in der Richtung der Längsachse,

Fig. 3                eine Draufsicht auf Fig. 2,

Fig. 4                einen Schnitt längs der Linie
                      IV - IV in Fig. 1,

Fig. 5                einen Schnitt längs der Linie V - V

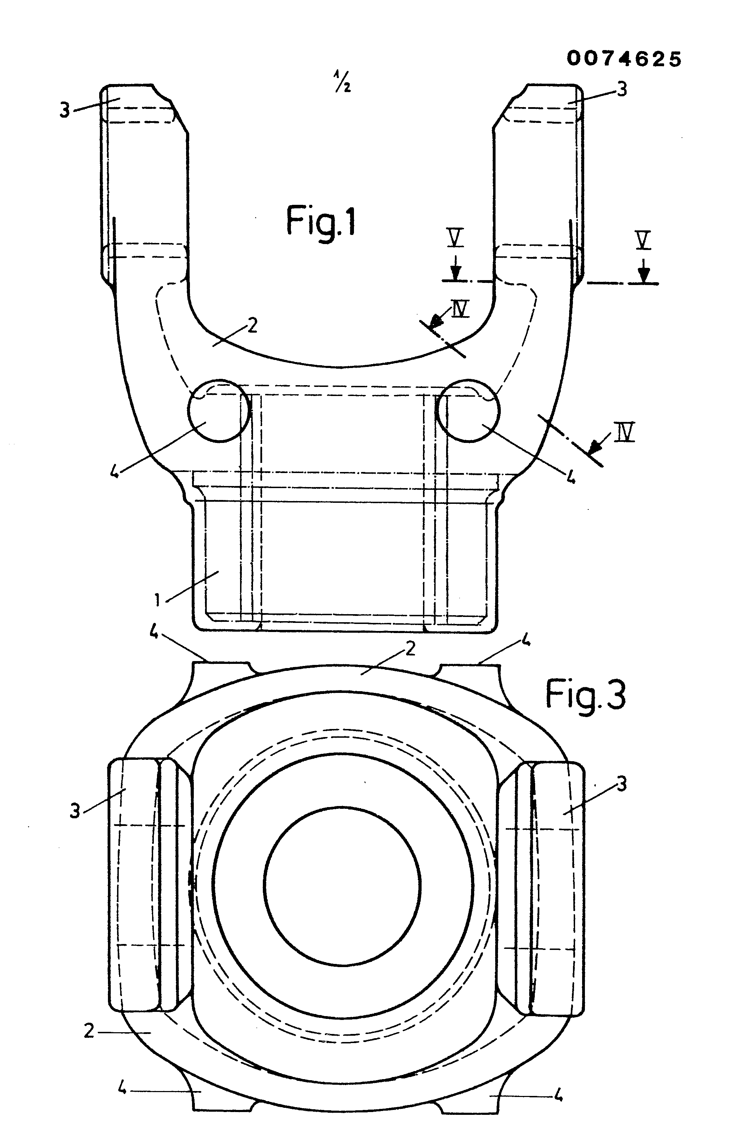

                      in Fig. 1, und

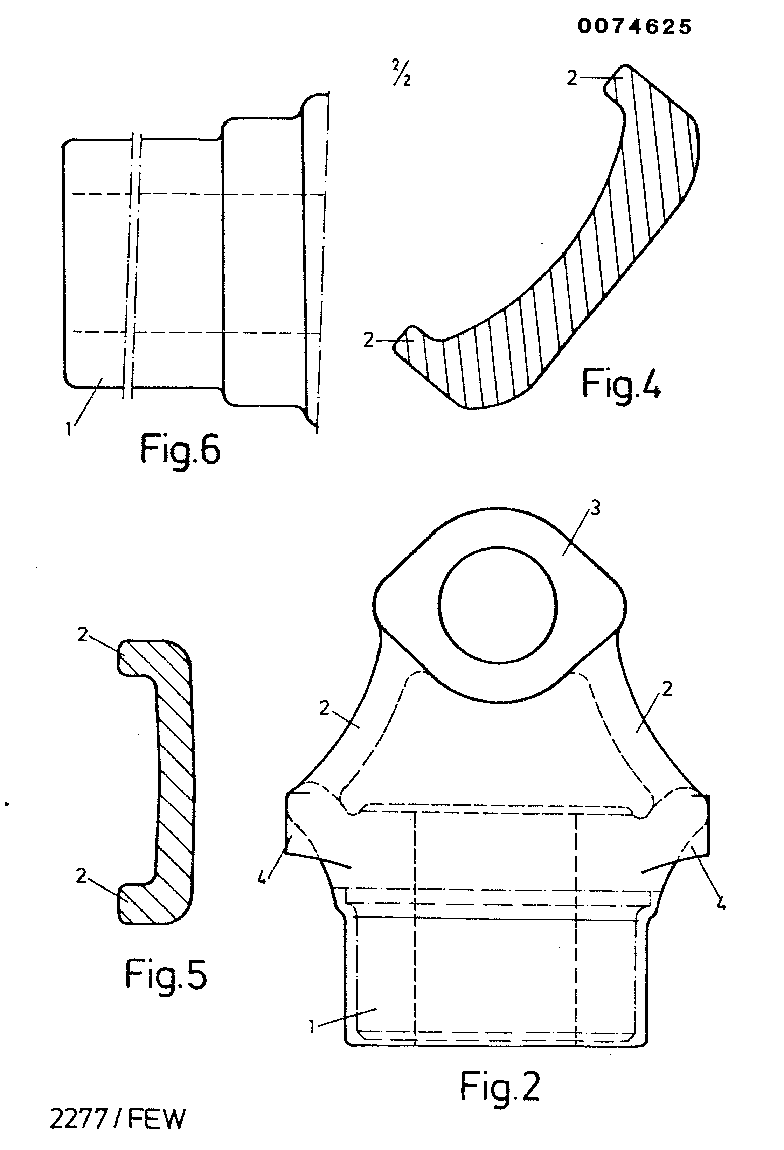

Fig. 6                eine Variante des Rohrkörpers in
                      Fig. 1.

In Fig. 1 und 2 ist der Gelenkkopf von zwei Seiten
dargestellt, wobei die Betrachtungsrichtung in den
beiden Fällen jeweils um 90$^{\circ}$ voneinander abweicht.
Der Gelenk- oder Gabelkopf besteht aus einem unteren,
rohrförmigen Teil 1 mit Innenverzahnung für die
gleitende, drehfeste Verbindung mit der Kardanwelle.
Die sich in der Längsrichtung der Kardanwelle erstreckenden Zähne sind in der Zeichnung lediglich

- 4 -

angedeutet und werden bei der Bearbeitung des Gussstückes maschinell hergestellt.

Aus den Fig. 1, 2 und 3 geht hervor, dass jeweils
eine Rippe 2 vorgesehen ist, die sich zwischen den
Lagern 3 erstreckt und deren Festigkeit bzw. diejenige zwischen den beiden Lagern 3 und dem rohrförmigen Teil 1 erhöht. Deshalb sind die Rippen
leicht gegen den Rohrkörper gewölbt. Sie können sich
auch gegen den Rohrkörper hin verjüngen, so dass die
Verstärkung zwischen Lager und Rohrkörper erfolgt.
In diesem Zusammenhang wird ferner auf die Fig. 4
und 5 hingewiesen.

Da die Gabelköpfe im Betrieb mit einer hohen Drehzahl rotieren ist ein genaues Auswuchten erforderlich.
Um die Auswuchtung problemlos durchführen zu können,
sind die gegossenen Gabelköpfe mit jeweils vier angegossenen zapfenförmigen Körpern 4 versehen.

Diese Körper 4 können nach Bedarf abgeschliffen oder
mit Bohrungen versehen werden, um einen einwandfreien Rundlauf zu gewährleisten. Ferner ist es möglich, sofern erforderlich, die Rippe 2 zum Auswuchten
einseitig zu verkleinern.

Anstelle des bisher verwendeten Schmiedeverfahrens
ist der vorliegende Gelenkkopf aus Gusseisen mit
Kugelgraphit (GGG) gegossen. Dabei hat sich insbesondere das Material GGG 50 als geeignet erwiesen,
obschon auch die anderen GGG-Metalle gut geeignet
sind.

- 5 -

Der beschriebene, gegossene Gelenkkopf hat gegenüber
bestehender, geschmiedeter Ausführung u.a. die folgenden Vorteile:

1) die maschinelle Bearbeitung wird erleichtert
   und erfordert weniger Zeit,

2) die Schwingungsdämpfung wird verbessert,

3) durch die vorgesehenen Rippen wird mit relativ
   wenig Material eine hohe Festigkeit erreicht,
   und

4) durch die Verwendung von GGG 50 wird ein niedriges Gewicht erreicht.

<u>P a t e n t a n s p r ü c h e</u>

2277/FEW

1. Gegossener Gelenkkopf für Kardanwelle mit Rohrkörper zur verschiebbaren, drehfesten Halterung
   der Kardanwelle sowie mit Auswuchtelementen, dadurch gekennzeichnet, dass die Lager (3) beidseitig peripher um den Rohrkörper durch Verstärkungsrippen (2) verbunden sind.

2. Gelenkkopf nach Anspruch 1, dadurch gekennzeichnet,
   dass die Verstärkungsrippen gegen den Rohrkörper
   (1) gewölbt sind.

3. Gelenkkopf nach Anspruch 2, dadurch gekennzeichnet,
   dass sich die Verstärkungsrippen gegen den Rohrkörper (1) hin verjüngen.

4. Gelenkkopf nach Anspruch 1, dadurch gekennzeichnet,
   dass er aus Gusseisen mit Kugelgraphit (GGG),
   insbesondere aus GGG 50 gegossen ist.

5. Gelenkkopf nach Anspruch 1, dadurch gekennzeichnet,
   dass er aus einer Leichtmetallegierung, insbesondere Aluminiumlegierung gegossen ist.

0074625

½

Fig.1

Fig.3

2277 / FEW

2/2

Fig.4

Fig.6

Fig.5

Fig.2

Europäisches
Patentamt

**EUROPÄISCHER RECHERCHENBERICHT**

0074625

Nummer der Anmeldung

EP 82 10 8320

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | EP-A-0 003 873 (GKN TRANSMISSIONS) <br> * Insgesamt * | 1,3,5 | F 16 D 3/40 |
| Y | | 2 | |
| Y | GB-A- 654 581 (CLEVELAND STEEL) <br> * Insgesamt * | 2 | |
| A | | 3 | |
| A | GB-A- 338 968 (RANSOMES, SIMS) | | |

RECHERCHIERTE SACHGEBIETE (Int. Cl. ³)

F 16 D 3/00
B 22 D 19/00

Der vorliegende Recherchenbericht wurde für alle Patentansprüche erstellt.

| Recherchenort <br> DEN HAAG | Abschlußdatum der Recherche <br> 07-01-1983 | Prüfer <br> BALDWIN D.R. |
|---|---|---|